# EUROPÄISCHE PATENTSCHRIFT

(11) **EP 2 936 598 B1**
(45) Veröffentlichungstag und Bekanntmachung des Hinweises auf die Patenterteilung: **19.10.2016**
(21) Anmeldenummer: 13745352.8
(22) Anmeldetag: 02.08.2013
(51) Int. Cl.: H01M 8/04955, H01M 8/04029, H01M 8/04119, H01M 8/04007, H01M 8/04537, B60L 11/18, H01M 8/04828, H01M 8/04044, H01M 8/04492

(54) **VERFAHREN ZUM BETREIBEN EINES BRENNSTOFFZELLENSYSTEMS**
METHOD FOR OPERATING A FUEL CELL SYSTEM
PROCÉDÉ POUR FAIRE FONCTIONNER UN SYSTÈME DE PILE À COMBUSTIBLE

(30) Priorität: 19.12.2012 DE 102012024860
(43) Veröffentlichungstag der Anmeldung: 28.10.2015
(73) Patentinhaber: Audi AG, 85045 Ingolstadt (DE)
(72) Erfinder: VAN DOORN, René, 74182 Obersulm-Willsbach (DE)
(74) Vertreter: Brandt, Kai
(86) Internationale Anmeldenummer: PCT/EP2013/002317
(87) Internationale Veröffentlichungsnummer: WO 2014/094923

(56) Entgegenhaltungen:
- DE-T5-112005 003 309
- JP-A- 2000 030 727
- JP-A- 2002 280 046
- US-A1- 2003 029 650
- US-A1- 2013 059 214

## Beschreibung

Die Erfindung betrifft ein Verfahren und eine Anordnung zum Betreiben eines Brennstoffzellensystems.

Ein Verfahren zur Steuerung eines Brennstoffzellensystems mit einer Brennstoffzelle ist aus der Druckschrift DE 10 118 151 A1 bekannt. Die Brennstoffzelle umfasst einen Anodenauslass, der wasserstoffhaltiges Anodenabgas austrägt, und einen Kathodenauslass, der ein sauerstoffhaltiges Kathodenabgas austrägt, eine Wasserstoffquelle zur Lieferung von Wasserstoff an eine Anode der Brennstoffzelle und einen Luftkompressor zur Lieferung von Sauerstoff an eine Kathode der Brennstoffzelle. Ferner ist hier ein modulierbarer Druckregler zur Änderung des Gegendrucks des Kathodenabgases am Kathodenauslass vorgesehen. Außerdem wird die Umgebung um das Brennstoffzellensystem herum erfasst und ein Signal zu der Umgebung an eine Steuerung gesendet. Zumindest ein Betriebszustand des Systems wird erfasst und ein Signal, das diesen angibt, an die Steuerung gesendet. Der Regler wird über die Steuerung in Reaktion auf die Signale zur Optimierung der Leistung des Systems in der Umgebung moduliert.

Ein Brennstoffzellengenerator, der Brennstoffzellen verwendet, die eine Zuführmenge eines Reaktionsgases aufnehmen, das einer Elektrode mit einem darauf angeordneten Katalysator zugeführt wird, um durch eine chemische Reaktion des Reaktionsgases eine elektromotorische Kraft zu erzeugen, ist in der Druckschrift DE 697 08 422 T2 beschrieben. Der Brennstoffzellengenerator weist eine Leistungsrückgang-Detektionsvorrichtung zum Detektieren eines Leistungsrückgangs der Brennstoffzellen, und eine Vergiftungszustand-Detektionsvorrichtung zum Detektieren eines Vergiftungszustands des Katalysators auf. Eine Temperaturregelvorrichtung ist hier dazu angepasst, die Temperatur der Brennstoffzellen zu erhöhen, wenn die Vergiftungszustand-Detektionsvorrichtung den Vergiftungszustand des Katalysators detektiert und die Leistungsrückgang-Detektionsvorrichtung einen Leistungsrückgang der Brennstoffzellen detektiert. Eine Gasdruck-Regelvorrichtung ist dazu angepasst, den Druck von Reaktionsgas, das einer Elektrode zugeführt wird, als Reaktion auf die Temperaturregelung durch die Temperaturregelvorrichtung so zu regeln, dass der Partialdampfdruck des Reaktionsgases innerhalb eines vorbestimmten Bereichs gehalten wird.

In der Druckschrift DE 10 2010 052 839 A1 ist beschrieben, dass ein Brennstoffzellensystem an Bord eines Transportmittels zur Energieerzeugung und zur Wassererzeugung eingesetzt werden kann. Um das Gesamtgewicht des Brennstoffzellensystems zu verringern, wird eine Brennstoffzelle in Abhängigkeit von einem aktuellen Füllstand oder einem Grenzstand des Wassertanks sowie eines prognostizierten, zukünftigen Wasserverbrauchs gesteuert oder geregelt. Auf diese Weise ist es möglich, die im Wassertank zu speichernde Wassermenge zu minimieren.

Die Druckschriften DE 11 2005 003309 T und US 2003/029650 A1 offenbaren aus dem Stand der Technik bekannte Verfahren zum Betreiben eines Brennstoffzellensystems eines Kraftfahrzeugs sowie Anordnungen zur Durchführung desselben. Vor diesem Hintergrund werden ein Verfahren und eine Anordnung mit den Merkmalen der unabhängigen Patentansprüche vorgestellt. Weitere Vorteile und Ausgestaltungen der Erfindung ergeben sich aus den abhängigen Patentansprüchen, der Beschreibung und der beiliegenden Zeichnung.

Das erfindungsgemäße Verfahren ist zum Betreiben eines Brennstoffzellensystems eines Kraftfahrzeugs ausgebildet und weist die in Anspruch 1 genannten Merkmale auf. Dabei weist das Brennstoffzellensystem mindestens eine Brennstoffzelle auf, wobei dem Brennstoffzellensystem ein Wasserkreislauf mit einem Wärmetauscher und einem Wasserspeicher zugeordnet ist. Außerdem ist dem Kraftfahrzeug ein Kühlkreislauf mit einer Fördereinrichtung zum Fördern eines Kühlmediums zugeordnet, das dem Wärmetauscher des Wasserkreislaufs zugeführt wird. Dabei wird mit dem Wärmetauscher aus Kathodenabgas der mindestens einen Brennstoffzelle Wasser kondensiert und in dem Wasserspeicher gespeichert, wobei die mindestens eine Brennstoffzelle mit Wasser aus dem Wasserspeicher gekühlt wird. Bei dem erfindungsgemäßen Verfahren wird die Fördereinrichtung in Abhängigkeit eines Füllstands des Wassers im Wasserspeicher betrieben. Die erfindungsgemäße Anordnung ist zum Betreiben eines Brennstoffzellensystems eines Kraftfahrzeugs ausgebildet und weist die in Anspruch 10 genannten Merkmale auf. Dabei weist das Brennstoffzellensystem mindestens eine Brennstoffzelle auf, wobei dem Brennstoffzellensystem ein Wasserkreislauf mit einem Wärmetauscher und einem Wasserspeicher zugeordnet ist. Weiterhin ist vorgesehen, dass der Wasserspeicher auch als Komponente der Anordnung ausgebildet ist. Außerdem ist dem Kraftfahrzeug ein Kühlkreislauf mit einer Fördereinrichtung zum Fördern eines Kühlmediums zugeordnet, das dem Wärmetauscher des Wasserkreislaufs zuzuführen ist, wobei mit dem Wärmetauscher aus Kathodenabgas der mindestens einen Brennstoffzelle Wasser zu kondensieren und in dem Wasserspeicher zu speichern ist. Die mindestens eine Brennstoffzelle ist mit Wasser aus dem Wasserspeicher zu kühlen. Die Fördereinrichtung des Kühlkreislaufs ist in Abhängigkeit eines Füllstands des Wassers im Wasserspeicher zu betreiben.

Ergänzend ist es möglich, die Fördereinrichtung des Kühlkreislaufs in Abhängigkeit eines Lastbereichs des mindestens einen Brennstoffzelle und/oder in Abhängigkeit einer Leistung des Kraftfahrzeugs zu betreiben. Folglich kann die Fördereinrichtung des Kühlkreislaufs in Abhängigkeit des Füllstands des Wasserspeichers und/oder des Lastbereichs angeschaltet oder abgeschaltet werden. Dem Wasserspeicher wird nur dann flüssiges Wasser zugeführt, wenn die Fördereinrichtung des Kühlkreislaufs angeschaltet ist und betrieben wird.

Brennstoffzellen sind dazu ausgebildet, mit hoher Effizienz Wasserstoff und Sauerstoff aus der Luft in Wasser und Strom umzuwandeln. Mit dem erfindungsgemäßen Verfahren und der erfindungsgemäßen Anordnung kann für ein Brennstoffzellensystem, das mindestens eine Brennstoffzelle aufweist, eine zusätzliche Kühlung realisiert werden.

Trotz einer hohen Effizienz von über 50% in annähernd sämtlichen Leistungsbereichen, fällt beim Betrieb der Brennstoffzelle noch immer eine beträchtliche Wärmemenge an, die aus der Brennstoffzelle abzuführen ist. Für die Kühlung eines Stapels Brennstoffzellen sind zwei unterschiedliche Kühlungskonzepte bekannt. Dabei wird bei einem ersten Kühlungskonzept eine klassische Kühlung mit einem internen Wärmetauscher umgesetzt.

Bei einem zweiten Kühlungskonzept, auf dem die Erfindung beruht, wird eine Verdampfungskühlung von Wasser aus dem Wasserspeicher genutzt.

Zur Realisierung einer Ausgestaltung der erfindungsgemäßen Anordnung ist vorgesehen, dem Brennstoffzellensystem den Wasserspeicher für Wasser, das als Kühlwasser zu verwenden ist, zuzuordnen und in das Brennstoffzellensystem, üblicherweise in den Wasserkreislauf des Brennstoffzellensystems, bspw. einzubauen. Dieser Wasserspeicher ist üblicherweise als Wasserbehälter bzw. Wassertank mit einem Fassungsvolumen von einigen Litern, in der Regel einer einstelligen Anzahl an Litern, z. B. von 5 Litern, ausgebildet. In der Regel ist ein Volumen des Wasserspeichers durch eine Anzahl und/oder Größe der zu kühlenden Brennstoffzellen zu wählen.

Die Anordnung, die in einer möglichen Ausgestaltung das Brennstoffzellensystem, den Wasserkreislauf und ggf. den Kühlkreislauf des Kraftfahrzeugs umfasst, wird so betrieben, dass der vorgesehene Wasserspeicher üblicherweise nahezu voll ist. Dabei kann der Wasserspeicher als Komponente des Wasserkreislaufs ausgebildet sein. Hierzu wird berücksichtigt, dass bei Betrieb der mindestens einen Brennstoffzelle unter Umständen mehr Wasser, d. h. Produktwasser, kondensiert wird als für eine ausgeglichene Wasserbilanz nötig ist. Üblicherweise umfasst das Brennstoffzellensystem einen in der Regel ohnehin vorhandenen Wasserkreislauf, der zum Kühlen der Brennstoffzellen verwendet wird, und den Wasserspeicher. Dieser Wasserkreislauf umfasst eine als Kondensator ausgebildeten Wärmetauscher, der dazu ausgebildet ist, gasförmiges Wasser aus einem Kathodenabgas der mindestens einen Brennstoffzelle durch Kondensation zu verflüssigen. Zum Abkühlen des zu verflüssigenden gasförmigen Wassers, das im Wasserkreislauf zirkuliert und/oder in dem Wasserspeicher gespeichert werden kann, wird das Kühlmedium in dem Kühlkreislauf verwendet, das dem Wärmetauscher des Wasserkreislaufs zugeführt wird. Dabei wird je nach Leistung der mindestens einen Brennstoffzelle eine Fördermenge des zum Kühlen des Wassers verwendeten Kühlmediums durch Kontrolle, d. h. Steuerung und/oder Regelung des Betriebs der Fördereinrichtung des Kühlkreislaufs, eingestellt.

Falls ein Betriebspunkt erreicht wird, bei dem die über den Wasserkreislauf üblicherweise mit Wasser bereitgestellte Kühlung nicht ausreicht, wird so lange Wasser aus dem Wasserspeicher entnommen, bis dessen Inhalt eine gewisse, ggf. betriebspunktabhängige, Untergrenze von bspw. 1 Liter an verbliebenem Wasser erreicht hat, so dass eine Menge des Wassers in dem Wasserspeicher einen vorgesehenen Minimalwert nicht unterschreitet. So lange die mindestens eine Brennstoffzelle durch Wasser aus dem Wasserspeicher gekühlt wird, kann das Brennstoffzellensystem bei einer vorgesehenen Leistung betrieben werden. Erst wenn der vorgesehene Minimalwert für die Menge an verbliebenem Wasser in dem Wasserspeicher erreicht ist, ist vorgesehen die Leistung des Brennstoffzellensystems zum Kühlen zu reduzieren, da nunmehr keine Kühlung mit dem Wasser aus dem Wasserspeicher mehr möglich ist.

Für die Kühlung des Brennstoffzellensystems bei einer Leistung von 100 kW kann bspw. eine Menge an Wasser mit einer Strömungsgeschwindigkeit von etwa 35 ml/s benötigt werden. Falls das Brennstoffzellensystem bei einer Leistung von 75 kW betrieben wird, wird hierzu lediglich eine Menge mit einer Strömungsgeschwindigkeit von 23 ml/s benötigt. Ist der Wasserkreislauf lediglich in der Lage, Wasser mit einer Strömungsgeschwindigkeit von 23 ml/s zum Kühlen bereitzustellen, so kann unter Berücksichtigung der Differenz der Strömungsgeschwindigkeiten von 12 ml/s und der oben erwähnten, bspw. 4 Liter der verfügbaren Menge an Wasser aus dem Wasserspeicher, das von dem Brennstoffzellensystem mit Energie zu versorgende Kraftfahrzeug über eine Zeitspanne von ca. 5½ Minuten mit einer Leistung von 100 kW statt nur 75 kW angetrieben werden. Somit wird zum Kühlen der mindestens einen Brennstoffzelle üblicherweise Wasser, das durch den Wasserkreislauf strömt, verwendet, wobei eine Kühlleistung von einer Menge und/oder Geschwindigkeit des durch den Wasserkreislauf strömenden Wassers abhängig ist. Zum zusätzlichen Kühlen der mindestens einen Brennstoffzelle kann je nach betriebspunktabhängiger Leistung der mindestens einen Brennstoffzelle das Wasser aus dem Wasserspeicher verwendet werden, wobei eine dabei bereitzustellende Kühlleistung von der Menge und/oder Geschwindigkeit des Wassers, das über die Fördereinrichtung des Wasserkreislaufs aus dem Wasserspeicher bereitgestellt wird, abhängig ist.

Die Anordnung und/oder das Verfahren ist bzw. sind u. a. zum Betreiben von Brennstoffzellensystemen größerer Leistungsklassen geeignet. Dabei ist es möglich, bei einem Temperaturniveau der mindestens einen Brennstoffzelle, das bei deren Betrieb etwa 80°C beträgt, eine bei einer gewissen Leistung der mindestens einen Brennstoffzelle betriebsbedingt anfallende Wärme, gerade bei hohe Außentemperaturen, für das Brennstoffzellensystem in dem Kraftfahrzeug effektiv abzuführen. In Ausgestaltung der Anordnung und/oder des Verfahrens wird berücksichtigt, dass höhere Leistungen nicht dauerhaft sondern üblicherweise nur bei instationären Betriebszuständen des Kraftfahrzeugs zum Antreiben des Kraftfahrzeugs, wie bspw. bei Beschleunigungen oder Bergfahrten, wenn eine erhöhte Kraft benötigt wird, abgerufen werden.

Mit der Anordnung und/oder dem Verfahren kann durch die nunmehr vorgesehene Kühlung ein gesamter Wirkungsgrad des Kraftfahrzeugs verbessert werden. So ist üblicherweise in einem niedrigen bzw. unteren Lastpunktbereich ein prozentualer Anteil an Antriebsenergie zum Betreiben der Fördereinrichtung des Kühlkreislaufs zum Fördern des Kühlmittels hoch. Dies kann bedeuten, dass hierfür in dem unterem Lastpunktbereich eine Leistung von 300 bis 400 Watt erforderlich ist, wodurch der gesamte Wirkungsgrad sinkt. Dabei wird der Wasserspeicher über ein gewisses Zeitintervall im Defizit gefahren, was hier bedeutet, dass eine darin gespeicherte Menge an Wasser dem Minimalwert für die hierfür vorgesehene Untergrenze entspricht, und der Wasserspeicher nicht aufgefüllt wird, da die Fördereinrichtung des Kühlreislaufs abgeschaltet ist und folglich mit dem Wärmetauscher kein Wasser aus dem Kathodenabgas kondensiert wird. Der Wasserspeicher wird erst im Anschluss wieder mit Wasser aufgefüllt. Hierzu wird die Fördereinrichtung des Kühlkreislaufs wieder angeschaltet, wobei die Fördereinrichtung wieder Kühlmedium zu dem Wärmetauscher fördert, wodurch wieder Wasser aus dem Kathodenabgas kondensiert und dem Wasserspeicher zugeführt wird. Dabei steigt der Verbrauch der Fördereinrichtung zu ihrer Fördermenge unterproportional an. So ist der gesamte Wirkungsgrad über die Fahrzeit besser als für den Fall, dass die Fördereinrichtung des Kühlkreislaufs zum Fördern von Wasser zu dem Wärmespeicher immer angeschaltet ist. Somit wird in Ausgestaltung der Anordnung und/oder des Verfahrens die Fördereinrichtung des Kühlkreislaufs nur intermittierend, d. h. mit Unterbrechungen oder Pausen, betrieben.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in der Zeichnung schematisch dargestellt und wird unter Bezugnahme auf die Zeichnung schematisch und ausführlich beschrieben.

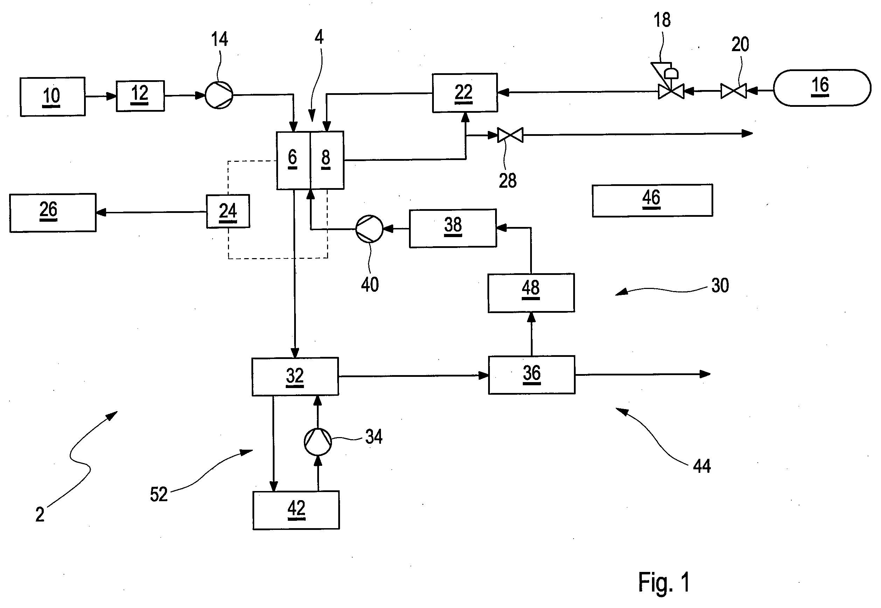

Figur 1 zeigt in schematischer Darstellung eine Ausführungsform einer erfindungsgemäßen Anordnung und ein Beispiel für ein Brennstoffzellensystem.

Das in Figur 1 schematische dargestellte Beispiel eines Brennstoffzellensystems 2 für ein Kraftfahrzeug umfasst mindestens eine Brennstoffzelle 4, die wiederum eine Kathode 6 und eine Anode 8 umfasst.

Bei einem Betrieb des Brennstoffzellensystems 2 wird Luft aus der Umgebung durch einen Luftfilter 10 gefiltert, von einem als Heißfilm-Anemometer (HFM) ausgebildeten Luftmassensensor 12 quantitativ und/oder qualitativ analysiert, über eine Fördereinheit 14, hier z. B. über einen Kompressor, verdichtet und der Kathode 6 der mindestens einen Brennstoffzelle 4 zugeführt.

Außerdem wird Wasserstoff aus einem hierfür vorgesehen Wasserstoffspeicher 16 über zwei Ventileinrichtungen 18, 20 einer Rezykliereinheit 22 zum Recyceln bzw. Wiederverwenden von Wasserstoff zugeführt. Ausgehend von der Rezykliereinheit 22 wird der Wasserstoff der Anode 8 der mindestens einen Brennstoffzelle 4 zugeführt.

In der mindestens einen Brennstoffzelle 4 reagiert Sauerstoff aus der Luft mit dem Wasserstoff zu Wasser und Strom, der über eine Energieverteilungseinheit 24 (PDU, Power Distribution Unit) an mindestens einen Verbraucher 26, wie z. B. einem Triebstrang, im Kraftfahrzeug verteilt wird.

Wasserstoff, der bei einer Reaktion in der mindestens einen Brennstoffzelle 4 nicht benötigt wird, kann wieder der Rezykliereinheit 22 zugeführt oder über ein Ventil 28 aus dem Brennstoffzellensystem 2 an die Umgebung abgeführt werden.

Außerdem umfasst das Brennstoffzellensystem 2 einen mit der mindestens einen Brennstoffzelle 2 verbundenen Wasserkreislauf 30, der hier einen als Kondensator ausgebildeten Wärmetauscher 32, einen Wasserabscheider 36, einen Wasserspeicher 48, einen Deionisationsfilter 38 und eine als Pumpe ausgebildete Fördereinrichtung 40 umfasst, die gemäß der beschriebenen Reihenfolge hintereinander angeordnet sind. Dabei können Positionen des Wasserspeichers 48 und des Deionisationsfilters 38 innerhalb des Wasserkreislaufs 30 vertauscht sein.

Dem Kraftfahrzeug ist zudem ein Kühlkreislauf 52 zugeordnet, der mindestens ein hier als Fahrzeugkühler ausgebildetes Kühlmodul 42 und eine hier als elektrische Umwälzpumpe ausgebildete Fördereinrichtung 34 aufweist, mit der ein Kühlmedium durch den Kühlkreislauf 52 zu fördern ist. Der Kühlkreislauf ist mit dem Wärmetauscher 32 des Wasserkreislaufs 30 verbunden.

Bei einem Betrieb des Wasserkreislaufs 30 wird über die Fördereinrichtung 40 aus hier nicht dargestellten porösen, bipolaren Platten des Deionisationsfilters 38 flüssiges, deionisiertes Wasser in die mindestens eine Brennstoffzelle 4 injiziert, in der dieses verdampft, wobei die mindestens eine Brennstoffzelle 4 bei einer Verdampfungswärme von etwa 42 kJ pro 18 g Wasser gekühlt wird. Das in der mindestens einen Brennstoffzelle 4 beim Kühlen verdampfte Wasser wird zusammen mit sog. Produktwasser, d. h. Wasser, dass bei der Reaktion in der mindestens eine Brennstoffzelle 4 entsteht, ebenso wie ein Überschuss an Sauerstoff und inertem Stickstoff aus der Luft über einen entsprechenden Auslass der Kathode 6 als Kathodenabgas abgeführt.

Folglich wird bei dem Verfahren Wasser aus der mindestens einen Brennstoffzelle 4 in den Wasserkreislauf 30 überführt. Hierbei kann es sich um Wasser handeln, das bei einer Reaktion in der mindestens einen Brennstoffzelle 4 entsteht. Alternativ oder ergänzend handelt es sich um Wasser, das zum üblichen Kühlen aus dem Wasserkreislauf 30 und/oder zum zusätzlichen Kühlen betriebspunktabhängig aus dem Wasserspeicher 48 der mindestens einen Brennstoffzelle 4 zugeführt wird.

Hierbei wird Wasser aus der mindestens einen Brennstoffzelle 4 zunächst dem Wärmetauscher 32 des Wasserkreislaufs 30, in dem das Wasser kondensiert wird, danach dem Wasserabscheider 36 des Wasserkreislaufs 30, in dem Gas aus dem Wasser entfernt wird, dem Wasserspeicher 48, einem Deionisationsfilter 38 des Wasserkreislaufs 30, in dem das Wasser deionisiert wird, und einer Fördereinrichtung 40 des Wasserkreislaufs 30 zugeführt. Dabei ist es möglich, in dem Wasserspeicher 48 eine bestimmte Menge an Wasser zu speichern.

Um einen geschlossenen Wasserkreislauf 30 bereitzustellen, so dass vom Kunden kein Wasser getankt werden muss, wird hier das Kathodenabgas als gesättigte Abluft, in der Regel gasförmiges Wasser, inerter Stickstoff mit einem Rest an Sauerstoff, dem Wärmetauscher 32 zugeführt. Sofern die Fördereinrichtung 34 des Kühlkreislaufs 52 angeschaltet ist und somit das Kühlmedium durch den Wärmetauscher 32 gefördert wird, wird Wasser aus dem Kathodenabgas kondensiert bzw. verflüssigt. Dieses flüssige Wasser wird in dem Wasserabscheider 36 von den gasförmigen Bestandteilen getrennt, die anschließend an die Umgebung abgegeben werden. Das Wasser wird dann in dem Wasserspeicher 48 gespeichert. Nach einer Deionisation kann Wasser über die zweite Fördereinrichtung 40 wieder der mindestens einen Brennstoffzelle 4 zugeführt werden. Folglich wird das Brennstoffzellensystem 2 hier mittels Verdampfungskühlung temperiert.

Die hier gezeigte Ausführungsform der erfindungsgemäßen Anordnung 44 umfasst ein Steuergerät 46, das dazu ausgebildet ist, mindestens einen Schritt der Ausführungsform des erfindungsgemäßen Verfahrens zu kontrollieren, d. h. zu steuern und/oder zu regeln. Ferner ist das Steuergerät 46 unabhängig von dem erfindungsgemäßen Verfahren dazu ausgebildet, übliche Funktionen des Brennstoffzellensystems 2 zu kontrollieren und folglich zu steuern und/oder zu regeln.

Außerdem umfasst die Anordnung 44 als Komponente den Wasserspeicher 48, der in dem Wasserkreislauf 30 angeordnet und hier als Wasserbehälter, bspw. als Wassertank, ausgebildet ist. Aus diesem Wasserspeicher 48 ist zum Kühlen der mindestens einen Brennstoffzelle 4 über die Fördereinrichtung 40 des Wasserkreislaufs 30 Wasser, das in dem Wasserspeicher 48 gespeichert ist, zu fördern und somit zuzuführen.

Mit der vorgestellten, erfindungsgemäßen Anordnung 44 ist das erfindungsgemäße Verfahren durchzuführen, wobei mit dem Steuergerät 46 der Anordnung 44 zumindest ein Schritt des Verfahrens zu kontrollieren ist.

Bei dem erfindungsgemäßen Verfahren zum Betreiben des Brennstoffzellensystems 2 wird dem Wärmetauscher 32 des Wasserkreislaufs 30 über die Fördereinrichtung 34 des Kühlkreislaufs 52 das Kühlmedium aus dem Kühlkreislauf 52 zugeführt, wobei mit dem Wärmetauscher 32 aus Kathodenabgas der mindestens einen Brennstoffzelle 4 Wasser kondensiert und in dem Wasserspeicher 48 gespeichert wird, wobei die mindestens eine Brennstoffzelle 4 mit Wasser aus dem Wasserspeicher 48 gekühlt wird. Die Fördereinrichtung 34 des Kühlkreislaufs 52 wird in Abhängigkeit eines Füllstands des Wassers im Wasserspeicher 48 betrieben.

In Ausgestaltung wird das Wasser mit einer Fördereinrichtung 40 des Wasserkreislaufs 30 aus dem Wasserspeicher 48 in die mindestens eine Brennstoffzelle 4 gefördert, so lange in dem Wasserspeicher 48 eine Mindestmenge an Wasser vorhanden ist.

Ferner kann vorgesehen sein, dass die Fördereinrichtung 34 des Kühlkreislaufs 52 eingeschaltet ist und betrieben wird, wenn das Brennstoffzellensystem 2 in einem hohen Lastbereich betrieben wird, wobei Wasser mit dem Wärmetauscher 32 kondensiert und in den Wasserspeicher 48 gefördert wird. Die Fördereinrichtung 34 des Kühlkreislaufs 52 ist ausgeschaltet, wenn das Brennstoffzellensystem 2 in einem niedrigen Lastbereich betrieben wird. Folglich kann die Fördereinrichtung 34 des Kühlkreislaufs 52 ergänzend in Abhängigkeit des Lastbereichs des Brennstofzellensystems 2 betrieben werden.

Die im niedrigen Lastbereich des Brennstoffzellensystems 2 ausgeschaltete Fördereinrichtung 34 des Kühlkreislaufs 52 wird angeschaltet und wieder betrieben, sobald der Füllstand des Wassers im Wasserspeicher 48 einen Minimalwert erreicht hat.

Außerdem wird die Fördereinrichtung 34 des Kühlkreislaufs 52 nach einem Anschalten im niedrigen Lastbereich des Brennstoffzellensystems 2 so lange betrieben, bis der Füllstand im Wasserspeicher 48 wieder definierbar einen Mindestwert aufweist und dann wieder ausgeschaltet.

Üblicherweise wird die mindestens eine Brennstoffzelle 4 mit Wasser, das in dem Wasserspeicher 48 gespeichert ist, gekühlt, wenn sich das Kraftfahrzeug in einem instationären Betriebszustand, in dem eine Leistung des Kraftfahrzeugs erhöht wird, befindet. In Ausgestaltung kann dies bedeuten, dass die mindestens eine Brennstoffzelle 4 mit Wasser, das in dem Wasserspeicher 48 gespeichert ist, gekühlt wird, wenn das Kraftfahrzeug beschleunigt und/oder eine Steigung hinauf fährt.

Die mindestens eine Brennstoffzelle 4 kann so lange mit Wasser, das in dem Wasserspeicher 48 gespeichert ist, gekühlt werden, bis eine Menge des Wassers in dem Wasserspeicher 48 einen Minimalwert, der nicht unterschritten werden sollte, erreicht hat.

Es ist zudem vorgesehen, dass der Wasserspeicher 48 in einem niedrigen Lastbereich defizitär betrieben wird, wenn die Menge des Wassers in dem Wasserspeicher 48 den vorgesehenen Minimalwert aufweist, wobei die Menge an Wasser im niedrigen Lastbereich nicht erhöht wird. In diesem Fall ist die Fördereinrichtung 34 des Kühlkreislaufs 52 ausgeschaltet, wodurch im Wärmetauscher 32 kein Wasser aus dem Kathodenabgas kondensiert wird. Somit wird aus dem Wasserspeicher 48 in defizitärem Betrieb zwar Wasser entnommen, jedoch kein neues Wasser zugeführt.

Der Wasserspeicher 48 umfasst ein gewisses Volumen, beispielsweise 5 Liter. Aus dem Wasserspeicher 48 wird hier soviel Wasser über die Fördereinrichtung 40 gefördert, wie zum Kühlen der mindestens einen Brennstoffzelle 4 benötigt wird.

Zur Kühlung der mindestens einen Brennstoffzelle 4 verwendetes Wasser wird als Bestandteil von gesättigtem Kathodenabgas, das zudem Luft und somit Stickstoff und Sauerstoff enthalten kann, der mindestens einen Brennstoffzelle 4 entnommen und mit dem Wärmetauscher 32 über das Kühlmedium im Kühlkreislauf, das von der Fördereinrichtung 34 gefördert wird, kondensiert.

Wärme, die in dem Wärmetauscher 32 bei der Kondensation zum Kühlen des Wassers aus der mindestens einen Brennstoffzelle 4 anfällt, wird in dem Kühlkreislauf 52, der dem Kraftfahrzeug zugeordnet ist, auf das Kühlmedium, bspw. Wasserethylenglykol (WEG), übertragen und in dem mindestens einen Kühlmodul 42 an die Umgebung abgegeben. Eine Umwälzung dieses Kühlmediums im Kühlkreislauf 52 wird durch die als elektrische Umwälzpumpe ausgebildete Fördereinrichtung 34 bewerkstelligt. Durch Kontrolle bzw. Steuerung und/oder Regelung der regelbaren Fördereinrichtung 34 kann eine Abfuhr von Wärme aus dem Wasserkreislauf 30 geregelt werden. Weiterhin kann dadurch auch in Abhängigkeit einer Temperatur des Kühlmediums eine Menge an flüssigem Wasser, die bei der Kondensation des Kathodenabgases anfällt, geregelt werden, wodurch wiederum ein Füllstand bzw. Wasserstand im Wasserspeicher 48 durch An- und Abschalten der Fördereinrichtung 34 des Kühlkreislaufs 52 geregelt und somit eingestellt wird.

Gerade im unteren und mittleren Leistungsbereich der mindestens einen Brennstoffzelle 4 wird zu deren Kühlung eine relativ geringe Menge an Wasser benötigt. Außerdem wird berücksichtigt, dass die Fördereinrichtung 34 des Kühlkreislaufs 52 einen relativ hohen Verbrauch hat. In Ausgestaltung der Erfindung ist vorgesehen, dass diese Fördereinrichtung 34 bis zum Erreichen eines minimalen Wasserstands von bspw. 1 Liter in dem Wasserspeicher 48 nicht betrieben wird. Hierbei wird dieser minimale Wasserstand ausgehend von einem höheren Wasserstand erreicht, wenn Wasser, das zum Kühlen der mindestens einen Brennstoffzelle 4 verwendet wird, aus dem Wasserspeicher 48 entnommen wird. Wird dieser minimale Wasserstand erreicht, so wird die zunächst ausgeschaltete Fördereinrichtung 34 angeschaltet und, evtl. mit größerem Durchsatz, wieder betrieben. Dies führt dazu, dass bei der Kondensation des Kathodenabgases mit dem Wärmetauscher 32 mehr Wasser anfällt als für den Betrieb der Brennstoffzelle 4 benötigt wird, wodurch der Wasserstand in dem Wasserspeicher 48 wiederum ansteigt. Da der elektrische Mehrverbrauch durch die Fördereinrichtung 34 in diesem Betriebspunkt geringer ist als der elektrische Verbrauch bei minimaler Last wäre, wird der Wirkungsgrad des Brennstoffzellensystems 2 über dessen Betriebszeit gerechnet, verbessert.

## Patentansprüche

1. Verfahren zum Betreiben eines Brennstoffzellensystems (2) eines Kraftfahrzeugs, das mindestens eine Brennstoffzelle (4) aufweist, wobei dem Brennstoffzellensystem (2) ein Wasserkreislauf (30) mit einem Wärmetauscher (32) und einem Wasserspeicher (48) zugeordnet ist, wobei dem Kraftfahrzeug ein Kühlkreislauf (52) mit einer Fördereinrichtung (34) zum Fördern eines Kühlmediums zugeordnet ist, das dem Wärmetauscher (32) des Wasserkreislaufs (30) zugeführt wird, wobei mit dem Wärmetauscher (32) aus Kathodenabgas der mindestens einen Brennstoffzelle (4) Wasser kondensiert und in dem Wasserspeicher (48) gespeichert wird, wobei die mindestens eine Brennstoffzelle (4) mit Wasser aus dem Wasserspeicher (48) gekühlt wird, **dadurch gekennzeichnet, dass** die Fördereinrichtung (34) des Kühlkreislaufs (52) in Abhängigkeit eines Füllstands des Wassers in dem Wasserspeicher (48) betrieben wird.

2. Verfahren nach Anspruch 1, bei dem Wasser mit einer Fördereinrichtung (40) des Wasserkreislaufs (30) aus dem Wasserspeicher (48) in die mindestens eine Brennstoffzelle (4) gefördert wird, so lange in dem Wasserspeicher (48) eine Mindestmenge an Wasser vorhanden ist.

3. Verfahren nach Anspruch 1 oder 2, bei dem Wasser aus der mindestens einen Brennstoffzelle (4) zunächst dem Wärmetauscher (32), einem Wasserabscheider (36) des Wasserkreislaufs (30), in dem Gas aus dem Wasser entfernt wird, dem Wasserspeicher (48), einem Deionisationsfilter (38) des Wasserkreislaufs (30), in dem das Wasser deionisiert wird, und einer Fördereinrichtung (40) des Wasserkreislaufs (30) zugeführt wird.

4. Verfahren nach einem der voranstehenden Ansprüche, bei dem die Fördereinrichtung (34) des Kühlkreislaufs (52) eingeschaltet ist und betrieben wird, wenn das Brennstoffzellensystem (2) in einem hohen Lastbereich betrieben wird, wobei Wasser mit dem Wärmetauscher (32) kondensiert wird und in den Wasserspeicher (48) gefördert wird.

5. Verfahren nach Anspruch 3 oder 4, bei dem das in dem Wärmetauscher (32) kondensierte Wasser in dem Wasserabscheider (36) abgeschieden wird und in dem Wasserspeicher (48) gespeichert wird.

6. Verfahren nach einem der voranstehenden Ansprüche, bei dem die Fördereinrichtung (34) des Kühlkreislaufs (52) ausgeschaltet ist, wenn das Brennstoffzellensystem (2) in einem niedrigen Lastbereich betrieben wird.

7. Verfahren nach Anspruch 6, bei dem die im niedrigen Lastbereich des Brennstoffzellensystems (2) ausgeschaltete Fördereinrichtung (34) des Kühlkreislaufs (52) angeschaltet und wieder betrieben wird, sobald der Füllstand des Wassers im Wasserspeicher (48) einen vorgegebenen Minimalwert erreicht hat.

8. Verfahren nach Anspruch 7, bei dem die Fördereinrichtung (34) des Kühlkreislaufs (52) nach einem Anschalten im niedrigen Lastbereich des Brennstoffzellensystems (2) so lange betrieben wird, bis der Füllstand im Wasserspeicher (48) den vorgegebenen Mindestwert aufweist.

9. Verfahren nach einem der voranstehenden Ansprüche, bei dem die mindestens eine Brennstoffzelle (4) mit Wasser, das in dem Wasserspeicher (48) gespeichert ist, gekühlt wird, wenn sich das Kraftfahrzeug in einem instationären Betriebszustand, in dem eine Leistung des Kraftfahrzeugs erhöht wird, befindet.

10. Anordnung zum Betreiben eines Brennstoffzellensystems (2) eines Kraftfahrzeugs, das mindestens eine Brennstoffzelle (4) aufweist, wobei dem Brennstoffzellensystem (2) ein Wasserkreislauf. (30) mit einem Wärmetauscher (32) und einem Wasserspeicher (48) als Komponente der Anordnung (44) zugeordnet ist, wobei dem Kraftfahrzeug ein Kühlkreislauf (52) mit einer Fördereinrichtung (34) zum Fördern eines Kühlmediums zugeordnet ist, das dem Wärmetauscher (32) des Wasserkreislaufs (30) zuzuführen ist, wobei mit dem Wärmetauscher (32) aus Kathodenabgas der mindestens einen Brennstoffzelle (4) Wasser zu kondensieren und in dem Wasserspeicher (48) zu speichern ist, wobei die mindestens eine Brennstoffzelle (4) mit Wasser aus dem Wasserspeicher (48) zu kühlen ist, **dadurch gekennzeichnet, dass** die Fördereinrichtung (34) des Kühlkreislaufs (52) in Abhängigkeit eines Füllstands des Wassers in dem Wasserspeicher (48) zu betreiben ist.

11. Anordnung nach Anspruch 10, die ein Steuergerät (46) aufweist, das dazu ausgebildet ist, zumindest einen Schritt des Verfahrens nach einem der Ansprüche 1 bis 9 zu kontrollieren.

## Claims

1. A method for operating a fuel cell system (2) of a motor vehicle, the fuel cell system comprising at least one fuel cell (4), wherein a water circuit (30) including a heat exchanger (32) and a water reservoir (48) are allocated to the fuel cell system (2), wherein a coolant circuit (52) including a transport device (34) for transporting a coolant that is fed to the heat exchanger (32) of the water circuit (30) is allocated to the motor vehicle, the method comprising condensing, using the heat exchanger (32), water from cathode waste gas of the at least one fuel cell (4) and storing water from cathode waste gas in the water reservoir (48), and cooling the at least one fuel cell (4) with water from the water reservoir (48),
**characterized by**
activating the transport device (34) of the coolant circuit (52) depending on a level of water in the water reservoir (48).

2. The method according to claim 1, further comprising transporting, using a transport device (40) of the water circuit (30), water from the water reservoir (48) into the at least one fuel cell (4), as long as there is at least a predetermined amount of water in the water reservoir (48).

3. The method according to claim 1 or 2, wherein water from the at least one fuel cell (4) is fed to the heat exchanger (32), a water separator (36) of the water circuit (30) in which gas is removed, the water reservoir (48), a deionization filter (38) of the water circuit (30) in which the water is ionized, and a transport device (40) of the water circuit (30).

4. The method according to any of the preceding claims, wherein activating the transport device (34) of the coolant circuit (52) comprises operating the transport device of the coolant circuit when the fuel cell system (2) is being operated in a high load region, whereby water is condensed by the heat exchanger (32) and transported into the water reservoir (48).

5. The method according to claim 3 or 4, wherein the water condensed in the heat exchanger (32) is separated by the water separator (36) and stored in the water reservoir (48).

6. The method according to any of the preceding claims, wherein the transport device (34) of the coolant circuit (52) is deactivated when the fuel cell system (2) is operated in a low load region.

7. The method according to claim 6, wherein after the transport device (34) of the coolant circuit (52) has been deactivated when the fuel cell system (2) is operated in the low load region, the method further comprises activating the transport device of the coolant circuit again when the level of water in the water reservoir (48) has reached a predetermined minimum value.

8. The method according to claim 7, wherein the transport device (34) of the coolant circuit (52) after activation in the low load region of the fuel cell system (2) remains activated until the level of water in the water reservoir (48) is determined to be equal to or greater than the predetermined minimum value.

9. The method according to any of the preceding claims, wherein, when the motor vehicle is in a transient operating state in which power of the motor vehicle is being increased, the at least one fuel cell (4) is cooled with water from the water reservoir (48).

10. An assembly for operating a fuel cell system (2) of a motor vehicle, the fuel cell system comprising at least one fuel cell (4), wherein a water circuit (30) including a heat exchanger (32) and a water reservoir (48) are allocated to the fuel cell system (2) as a component of the assembly (44), wherein a coolant circuit (52) including a transport device (34) for transporting a coolant that is fed to the heat exchanger (32) of the water circuit (30) is allocated to the motor vehicle, wherein, using the heat exchanger (32), water from cathode waste gas of the at least one fuel cell (4) is condensed and stored in the water reservoir (48), and wherein the at least one fuel cell (4) is cooled with water from the water reservoir (48), **characterized in that**
the transport device (34) of the coolant circuit (52) is activated depending on a level of water in the water reservoir (48).

11. The assembly according to claim 10, comprising a controller (46) configured to control at least one step of the method according to any of claims 1 to 9.

## Revendications

1. Procédé pour faire fonctionner un système de piles à combustible (2) d'un véhicule automobile qui comporte au moins une pile à combustible (4), un circuit d'eau (30) avec un échangeur de chaleur (32) et avec un réservoir d'eau (48) étant associé au système de piles à combustible (2), un circuit de refroidissement (52) avec un dispositif de transport (34) pour transporter un fluide de refroidissement étant associé au véhicule automobile, lequel fluide de refroidissement est conduit à l'échangeur de chaleur (32) du circuit d'eau (30), de l'eau étant condensée avec l'échangeur de chaleur (32) à partir du gaz d'échappement de cathode de l'au moins une pile à combustible (4) et étant stockée dans le réservoir d'eau (48), l'au moins une pile à combustible (4) étant refroidie avec de l'eau provenant du réservoir d'eau (48),
**caractérisé en ce qu'**on fait fonctionner le dispositif de transport (34) du circuit de refroidissement (52) en fonction d'un niveau de remplissage de l'eau dans le réservoir d'eau (48).

2. Procédé selon la revendication 1, selon lequel on transporte de l'eau avec un dispositif de transport (40) du circuit d'eau (30) à partir du réservoir d'eau (48) jusque dans l'au moins une pile à combustible (4) tant qu'une quantité minimale d'eau est présente dans le réservoir d'eau (48).

3. Procédé selon la revendication 1 ou 2, selon lequel on conduit de l'eau provenant de l'au moins une pile à combustible (4) d'abord à l'échangeur de chaleur (32), à un séparateur d'eau (36) du circuit d'eau (30), séparateur dans lequel du gaz est éliminé de l'eau, au réservoir d'eau (48), à un filtre de déionisation (38) du circuit d'eau (30), filtre de déionisation dans lequel l'eau est déionisée, et à un dispositif de transport (40) du circuit d'eau (30).

4. Procédé selon l'une des revendications précédentes, selon lequel on met en marche et fait fonctionner le dispositif de transport (34) du circuit de refroidissement (52) lorsque le système de piles à combustible (2) fonctionne dans une plage de charge élevée, de l'eau étant condensée avec l'échangeur de chaleur (32) et étant transportée jusque dans le réservoir d'eau (48).

5. Procédé selon la revendication 3 ou 4, selon lequel l'eau condensée dans l'échangeur de chaleur (32) est séparée dans le séparateur d'eau (36) et est stockée dans le réservoir d'eau (48).

6. Procédé selon l'une des revendications précédentes, selon lequel on arrête le dispositif de transport (34) du circuit de refroidissement (52) lorsque le système de piles à combustible (2) fonctionne dans une plage de charge basse.

7. Procédé selon la revendication 6, selon lequel on met en marche et refait fonctionner le dispositif de transport (34) du circuit de refroidissement (52), arrêté dans la plage de charge basse du système de piles à combustible (2), dès que le niveau de remplissage de l'eau dans le réservoir d'eau (48) a atteint une valeur minimale prescrite.

8. Procédé selon la revendication 7, selon lequel on fait fonctionner le dispositif de transport (34) du circuit de refroidissement (52), après une mise en marche dans la plage de charge basse du système de piles à combustible (2), jusqu'à ce que le niveau de remplissage dans le réservoir d'eau (48) ait la valeur minimale prescrite.

9. Procédé selon l'une des revendications précédentes, selon lequel l'au moins une pile à combustible (4) est refroidie avec de l'eau qui est stockée dans le réservoir d'eau (48) lorsque le véhicule automobile se trouve dans un état de fonctionnement non stationnaire dans lequel une puissance du véhicule automobile est augmentée.

10. Dispositif de fonctionnement d'un système de piles à combustible (2) d'un véhicule automobile qui comporte au moins une pile à combustible (4), un circuit d'eau (30) avec un échangeur de chaleur (32) et avec un réservoir d'eau (48) étant associé comme composant du dispositif (44) au système de piles à combustible (2), un circuit de refroidissement (52) avec un dispositif de transport (34) pour transporter un fluide de refroidissement étant associé au véhicule automobile, lequel fluide de refroidissement doit être conduit à l'échangeur de chaleur (32) du circuit d'eau (30), de l'eau devant être condensée avec l'échangeur de chaleur (32) à partir de gaz d'échappement de cathode de l'au moins une pile à combustible (4) et devant être stockée dans le réservoir d'eau (48), l'au moins une pile à combustible (4) devant être refroidie avec de l'eau provenant du réservoir d'eau (48), **caractérisé en ce que** le dispositif de transport (34) du circuit de refroidissement (52) doit être commandé en fonction d'un niveau de remplissage de l'eau dans le réservoir d'eau (48).

11. Dispositif selon la revendication 10, qui comporte un appareil de commande (46) qui est conçu pour contrôler au moins une étape du procédé selon l'une des revendications 1 à 9.
